# FASCICULE DE BREVET EUROPEEN

(11) **EP 2 831 669 B1**
(45) Date de publication et mention de la délivrance du brevet: **30.08.2017**
(21) Numéro de dépôt: 13719954.3
(22) Date de dépôt: 29.03.2013
(51) Int. Cl.: G02F 1/133, G02F 1/1334

(54) **ALIMENTATION D'UN VITRAGE ELECTROCOMMANDABLE A CRISTAUX LIQUIDES, PROCÉDÉ D'ALIMENTATION D'UN TEL VITRAGE**
STROMVERSORGUNG FÜR EINE ELEKTRISCH BETRIEBENE, FLÜSSIGKRISTALL BASIERENDE VERGLASUNG; VERSORGUNGSVERFAHREN BESAGTER VERGLASUNG
POWER SUPPLY FOR AN ELECTRICALLY DRIVABLE, LIQUID CRYSTAL BASED GLAZING; SUPPLY PROCESS OF SAID GLAZING

(30) Priorité: 30.03.2012 FR 1252943
(43) Date de publication de la demande: 04.02.2015
(73) Titulaire: Saint-Gobain Glass France, 92400 Courbevoie (FR)
(72) Inventeur: ZHANG, Jingwei, F-91300 Massy (FR); CHENNEVIERE, Hugues, F-92700 Colombes (FR)
(74) Mandataire: Saint-Gobain Recherche
(86) Numéro de dépôt international: PCT/FR2013/050703
(87) Numéro de publication internationale: WO 2013/144526

(56) Documents cités:
- EP-A1- 0 802 445
- EP-A2- 0 777 143
- WO-A1-2006/005968
- DE-A1- 3 816 069
- DE-A1- 4 328 726
- US-A- 5 712 692

## Description

### DOMAINE TECHNIQUE DE L'INVENTION

Le domaine technique de l'invention est celui des vitrages électrocommandables à diffusion lumineuse variable, et plus particulièrement celui des vitrages à cristaux liquides. La présente invention concerne un vitrage électrocommandable et son alimentation électrique, ledit vitrage étant apte à passer d'un état diffusant à un état transparent sous l'application, par l'alimentation, d'une tension électrique alternative.

### ARRIERE PLAN TECHNOLOGIQUE DE L'INVENTION

Le degré de transparence d'un vitrage à cristaux liquides peut être modifié sous l'effet d'une alimentation électrique appropriée. Ce degré est en effet en lien direct avec l'amplitude de la tension appliquée au vitrage. On contrôle ainsi la capacité de vision à travers un tel vitrage, ce qui permet de la réduire voire de l'empêcher pendant un certain temps. De tels vitrages sont utilisés par exemple comme cloisons internes entre deux pièces dans un bâtiment, ou entre deux compartiments de train ou d'avion.

Un vitrage à cristaux liquides comporte classiquement une couche de cristaux liquides disposée entre une première électrode et une deuxième électrode reliées à une alimentation électrique. La couche de cristaux liquides est composée de cristaux liquides purs et d'un polymère. Quand le vitrage est mis sous tension par l'intermédiaire de l'alimentation, les cristaux liquides purs s'orientent selon un axe privilégié, et leur indice optique égale celui du polymère, ce qui conduit à un état transparent qui permet la vision. Hors tension, en l'absence d'alignement des cristaux liquides, le désaccord entre les indices optiques des cristaux liquides purs et du polymère rend le vitrage diffusant et empêche la vision. La société Saint-Gobain Glass commercialise notamment de tels vitrages à cristaux liquides sous la dénomination commerciale Privalite.

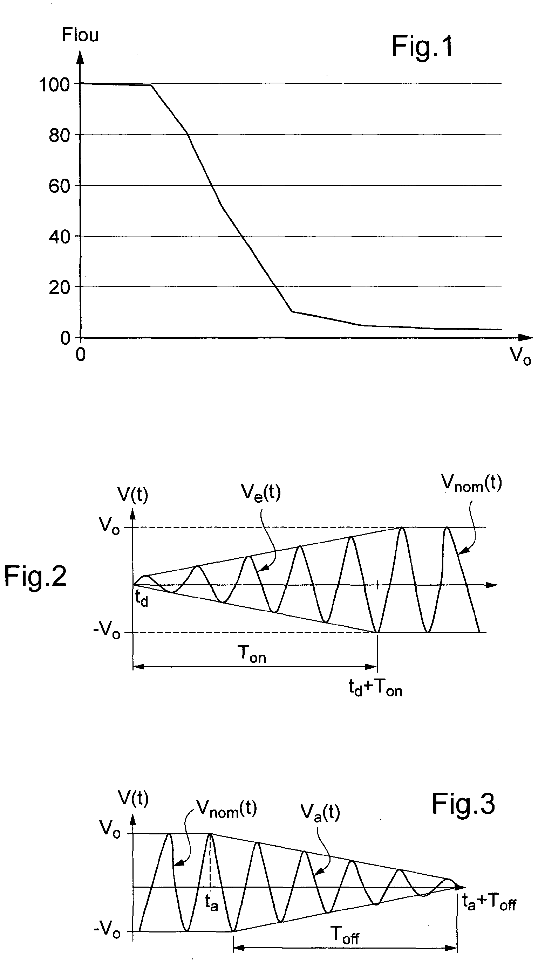

Ces vitrages sont classiquement alimentés par une tension alternative sinusoïdale V(t) = V₀sin(2πf₀t), où la fréquence f₀ est par exemple de 50Hz, et l'amplitude V₀, dite amplitude de fonctionnement, est typiquement de l'ordre de quelques dizaines de volt. Le degré de transparence à travers le vitrage est mesuré par le niveau de flou (« haze » en anglais). La figure 1 montre la relation entre le niveau de flou et l'amplitude V₀. Pour V₀=0V, le niveau de flou est proche de 100% et le vitrage électrocommandable à cristaux liquides est en état diffusant. Pour V₀ égale à une amplitude nominale Vₙₒₘ, le niveau de flou est d'environ 5%, et le vitrage est en état transparent. L'amplitude nominale Vₙₒₘ dépend des caractéristiques intrinsèques du vitrage, et notamment de la couche de cristaux liquides.

Au démarrage de l'alimentation, le vitrage passe classiquement d'une tension nulle, correspondant à un état diffusant, à une tension d'amplitude V₀=Vₙₒₘ, correspondant à un état transparent ou quasi transparent. De même, à l'arrêt de l'alimentation, le vitrage passe de la tension V₀=Vₙₒₘ à une tension nulle.

Le passage de l'état diffusant à l'état transparent, et inversement de l'état transparent à l'état diffusant, est immédiat, ce qui peut être considéré comme brutal visuellement. EP0777143 A2 divulgue un vitrage à cristaux liquides dispersés dans un matrice polymère et son alimentation associée. WO2006/005968 A1 et DE4328726 A1 divulguent quant à eux des vitrages à cristaux liquides avec une alimentation permettant des transitions sans à-coups.

### DESCRIPTION GENERALE DE L'INVENTION

L'objet de l'invention propose une solution pour éviter un passage brutal du vitrage électrocommandable à cristaux liquides d'un état diffusant à un état transparent, et/ou inversement.

L'invention s'applique également au cas dans lequel une électrode est réfléchissante ou semi-réfléchissante, ou encore au cas dans lequel un élément réfléchissant ou semi-réfléchissant est rapporté sur le substrat, et propose donc également une solution pour éviter un passage brutal du vitrage à cristaux liquides d'un état diffusant à un état réfléchissant ou semi-réfléchissant, et/ou inversement.

En outre, l'invention s'applique également au cas dans lequel la couche de cristaux liquides est colorée, et propose donc également une solution pour éviter un passage brutal du vitrage à cristaux liquides d'un état diffusant à un état coloré, et/ou inversement.

Selon un premier aspect, l'invention concerne essentiellement un vitrage électrocommandable à cristaux liquides comportant un substrat (transparent ou éventuellement coloré, en verre ou polymère) porteur d'un élément à cristaux liquides disposé entre une première électrode (transparente) et une deuxième électrode reliées à une alimentation électrique, l'élément à cristaux liquides étant apte à passer :
- d'un état diffusant dans lequel le vitrage est soumis à une tension nulle,
- à un état transparent et/ou coloré, dans lequel le vitrage est soumis à une tension alternative sinusoïdale d'amplitude dite de fonctionnement,
l'alimentation électrique étant adaptée pour appliquer au vitrage une tension de démarrage dont l'amplitude augmente progressivement de zéro jusqu'à l'amplitude de fonctionnement pendant une durée de démarrage d'au moins 0,1 seconde (voire d'au moins 0,5 seconde ou une seconde, et de préférence inférieure à une minute voire 30 secondes), débutant suite à l'activation de l'alimentation électrique,
et/ou une tension d'arrêt dont l'amplitude diminue progressivement de l'amplitude de fonctionnement jusqu'à zéro, pendant une durée d'arrêt d'au moins 0,1 seconde (voire d'au moins 0,5 seconde une seconde, et de préférence inférieure à une minute voire 30 secondes), débutant suite à l'arrêt de l'alimentation électrique.

Grâce à l'invention, le vitrage électrocommandable à cristaux liquides est soumis à une tension dont l'amplitude augmente progressivement et/ou diminue progressivement. Ainsi le niveau de flou diminue ou augmente progressivement avec l'amplitude, ce qui est visuellement plus agréable pour l'utilisateur, qui peut suivre la transition à l'oeil nu. La durée de démarrage ou d'arrêt est en effet choisie pour s'adapter à la sensibilité de l'oeil.

En outre, la tension de démarrage débutant à 0V, elle permet également d'éviter un pic important de courant au démarrage de l'alimentation, qui pourrait endommager le vitrage. En effet, grâce à l'invention, la tension aux bornes du vitrage au démarrage de l'alimentation ne passe pas immédiatement de 0V à une valeur quelconque incontrôlée V(t=0) comprise entre -V₀ et V₀ (amplitude du signal alternatif sinusoïdal). Le courant de démarrage i(t=0), qui augmente progressivement à partir de zéro, n'endommage donc pas le système de distribution électrique (« bus bars » en anglais), ni les couches électroconductrices, ou encore les cristaux liquides.

Outre les caractéristiques principales qui viennent d'être mentionnées dans le paragraphe précédent, le vitrage selon l'invention peut présenter une ou plusieurs caractéristiques complémentaires parmi les suivantes, considérées individuellement ou selon les combinaisons techniquement possibles :
▪ l'amplitude de la tension de démarrage augmente linéairement et/ou l'amplitude de la tension d'arrêt diminue linéairement. Une augmentation linéaire est en effet considérée comme agréable visuellement pour l'utilisateur, et est relativement simple de mise en oeuvre. L'augmentation progressive est avantageusement constante (continue), plutôt qu'en escalier, et ne comporte pas de retours à des valeurs plus basses déjà atteintes pendant la durée de démarrage, ni de paliers de stabilisation.
▪ la tension de démarrage est pseudo-sinusoïdale, et/ou la tension d'arrêt est pseudo-sinusoïdale.
▪ la tension de démarrage et la tension alternative sinusoïdale ont des fréquences sensiblement identiques, et/ou la tension d'arrêt et la tension alternative sinusoïdale ont des fréquences sensiblement identiques.
▪ la fréquence f₀ de la tension de fonctionnement alternative sinusoïdale est comprise entre 40Hz et 5kHz.
▪ la fréquence de la tension de démarrage, lorsque cette dernière est pseudo-sinusoïdale, est comprise entre 40Hz et 5kHz, et/ou la fréquence de la tension d'arrêt, lorsque celle-ci est pseudo-sinusoïdale, est comprise entre 40Hz et 5kHz.
▪ la tension de démarrage est polynomiale ou linéaire, et/ou la tension d'arrêt est polynomiale ou linéaire.
▪ au terme de la durée de démarrage, le flou du vitrage électrocommandable est inférieur à 10%, et de préférence inférieur ou égal à 5%.
▪ au terme de la durée de démarrage, la transmission lumineuse (TL) du vitrage est d'au moins 70%, voire 80% ou 90%, et, en présence d'élément réfléchissant, la réflexion lumineuse (RL) est d'au moins 50% voire 70%.
▪ l'amplitude de fonctionnement est inférieure ou égale à 200 Volts, et vaut typiquement de quelques dizaines de Volts à 200 Volts.
▪ l'alimentation comporte des moyens de réglage de la durée de démarrage.

Selon un deuxième aspect, l'invention concerne un procédé d'alimentation électrique d'un vitrage électrocommandable tel que décrit précédemment, comportant les étapes successives suivantes :
- une étape d'activation de l'alimentation,
- éventuellement une étape de réglage d'une durée de démarrage,
- une étape d'application au vitrage d'une tension de démarrage dont l'amplitude augmente progressivement de zéro jusqu'à l'amplitude de fonctionnement, pendant la durée de démarrage,
- une étape de désactivation de l'alimentation,
- éventuellement une étape d'application au vitrage d'une tension d'arrêt dont l'amplitude diminue progressivement de l'amplitude de fonctionnement jusqu'à zéro pendant une durée d'arrêt d'au moins 0,1 seconde.

L'invention et ses différentes applications seront mieux comprises à la lecture de la description qui suit et à l'examen des figures qui l'accompagnent.

### BREVE DESCRIPTION DES FIGURES

Les figures ne sont présentées qu'à titre indicatif et nullement limitatif de l'invention.

Les figures montrent :
- à la figure 1, une courbe représentative de la relation entre le niveau de flou d'un vitrage électrocommandable et l'amplitude de la tension appliquée audit vitrage ;
- à la figure 2, un chronogramme représentant la tension délivrée par une alimentation à un vitrage électrocommandable selon un premier mode de réalisation de l'invention, au démarrage de ladite alimentation ;
- à la figure 3, un chronogramme représentant la tension délivrée par l'alimentation au vitrage de la figure 2, à l'arrêt de ladite alimentation ;
- à la figure 4, un chronogramme représentant la tension délivrée par une alimentation à un vitrage électrocommandable selon un deuxième mode de réalisation de l'invention, au démarrage de ladite alimentation ;
- à la figure 5, un chronogramme représentant l'amplitude de la tension délivrée par une alimentation à un vitrage électrocommandable selon le premier ou le deuxième mode de réalisation de l'invention ;
- à la figure 6, un schéma de principe fonctionnel d'une alimentation pour un vitrage électrocommandable selon le premier mode de réalisation de l'invention.

### DESCRIPTION DETAILLEE D'AU MOINS UN MODE DE REALISATION DE L'INVENTION

L'invention concerne une alimentation ALIM pour un vitrage VITR électrocommandable à cristaux liquides. Dans la suite de la description, on note V(t) la tension délivrée par l'alimentation ALIM au vitrage VITR.

Comme expliqué précédemment, le vitrage VITR comporte une couche de cristaux liquides disposée entre une première électrode et une deuxième électrode. Dans le mode de réalisation décrit, la première électrode et la deuxième électrode sont transparentes et sur des substrats transparents (typiquement polymères ou verres) éventuellement teintés, le vitrage VITR est ainsi apte à passer d'un état diffusant à un état transparent (ou quasi transparent) sous l'effet de la tension V(t). Le vitrage VITR se trouve :
- dans l'état diffusant lorsqu'il n'est soumis à aucune tension, c'est-à-dire lorsque la tension V(t) est nulle, et
- dans l'état transparent (le degré de transparence est par exemple d'au moins 70%) lorsque la tension V(t) est une tension alternative sinusoïdale. On a alors : V(t) = Vₙₒₘ(t) = V₀sin(2πf₀t), où :
   - V₀ est l'amplitude de la tension alternative sinusoïdale Vₙₒₘ(t), ladite amplitude V₀ étant appelée amplitude de fonctionnement dans la suite de la description. V₀ vaut classiquement de quelques dizaines de volts à 200V. V₀ est en lien direct avec le flou du vitrage VITR, comme expliqué précédemment. On choisit donc avantageusement V₀ de sorte qu'à cette amplitude le flou est inférieur à 10%, et de préférence inférieur ou égal à 5%.
   - f₀ est la fréquence de la tension alternative sinusoïdale Vₙₒₘ(t). L'alimentation ALIM étant classiquement reliée au secteur, f₀ vaut classiquement 50 ou 60 Hz.

On note que dans un autre mode de réalisation, la première électrode n'est pas transparente mais réfléchissante ou semi-réfléchissante. Le vitrage VITR est alors apte à passer d'un état diffusant à un état réfléchissant ou semi-réfléchissant, et inversement.

En variante, la couche de cristaux liquides est colorée, par exemple par ajout de colorant dichroïque comme cela se fait classiquement. En outre, le ou les substrats peuvent être revêtus, sur la face principale opposée à la face de la couche de cristaux liquides, de divers éléments fonctionnels : couche antireflet, couche de protection, etc. Par ailleurs, du côté de la face principale opposée à la face de la couche de cristaux liquides, le ou les substrats peuvent être feuilletés avec des contre-verres via des intercalaires de feuilletage.

Pour éviter un passage brutal du vitrage VITR d'un état à un autre, l'alimentation ALIM est apte à fournir une/des tension(s) de transition Vₑ(t), Vₛ(t), évitant au vitrage VITR d'être soumis brutalement d'une tension nulle à la tension alternative sinusoïdale Vₙₒₘ(t), et/ou inversement de la tension alternative sinusoïdale Vₙₒₘ(t) à une tension nulle. L'alimentation ALIM est ainsi apte à fournir :
- une tension de démarrage Vₑ(t) pendant une durée de démarrage Tₒₙ débutant suite à l'activation de l'alimentation ALIM, dont l'amplitude augmente progressivement de zéro jusqu'à l'amplitude de fonctionnement V₀. Dans un premier mode de réalisation, la tension de démarrage Vₑ(t) est une pseudo-sinusoïde à la fréquence f₀ de la tension alternative sinusoïdale Vₙₒₘ(t). Puis, au terme de la durée de démarrage Tₒₙ, l'alimentation ALIM délivre alors la tension alternative sinusoïdale Vₙₒₘ(t).
- et/ou une tension d'arrêt Vₛ(t) pendant une durée d'arrêt T_{off} débutant suite à la désactivation de l'alimentation ALIM, dont l'amplitude diminue progressivement de l'amplitude de fonctionnement V₀ jusqu'à zéro pendant la durée d'arrêt T_{off}. Dans un mode de réalisation, la tension d'arrêt Vₛ(t) est une pseudo-sinusoïde à la fréquence f₀ de la tension alternative sinusoïdale Vₙₒₘ(t).

La tension V(t) délivrée par l'alimentation selon un mode de réalisation de l'invention, est représentée aux figures 2 et 3. La figure 2 concerne le démarrage de l'alimentation ALIM, c'est-à-dire le cas dans lequel le vitrage VITR est initialement en état diffusant et l'on souhaite qu'il passe en état transparent, tandis que la figure 3 concerne l'arrêt de l'alimentation ALIM, c'est-à-dire lorsqu'on souhaite que le vitrage VITR repasse de l'état transparent à l'état diffusant.

Le démarrage de l'alimentation ALIM est réalisé au temps t=t_{d}. Pour les temps inférieurs à t=t_{d}, on a donc V(t)=0. Pendant la durée de démarrage Tₒₙ, on a : V(t)=Vₑ(t). Puis, au terme de la durée de démarrage Tₒₙ, on a : V(t)=Vₙₒₘ(t).

L'arrêt de l'alimentation ALIM est réalisé au temps t=tₐ. Pendant la durée d'arrêt T_{off} débutant à t=tₐ, on a : V(t)=Vₛ(t). Puis, au terme de la durée d'arrêt T_{off}, on a : V(t)=0.

Dans le mode de réalisation représenté aux figures 2 et 3 :
- la tension de démarrage Vₑ(t) et la tension d'arrêt Vₛ(t) sont pseudo-sinusoïdales ;
- l'amplitude de la tension de démarrage Vₑ(t) et l'amplitude de la tension d'arrêt Vₛ(t) augmentent linéairement ;
- la tension de démarrage Vₑ(t), la tension d'arrêt Vₛ(t), et la tension alternative sinusoïdale Vₙₒₘ(t) ont des fréquences sensiblement identiques. On note que parler de fréquence d'un signal pseudo-périodique est un abus de langage visant à alléger le texte, et qu'on entend naturellement parler de pseudo-fréquence.

Les caractéristiques listées ci-dessus ont pour avantage d'être simples de mise en oeuvre, et d'aboutir à une continuité en terme de fréquence et d'amplitude entre la tension de démarrage Vₑ(t) et la tension alternative sinusoïdale Vₙₒₘ(t) d'une part, et entre la tension alternative sinusoïdale Vₙₒₘ(t) et la tension d'arrêt Vₛ(t) d'autre part.

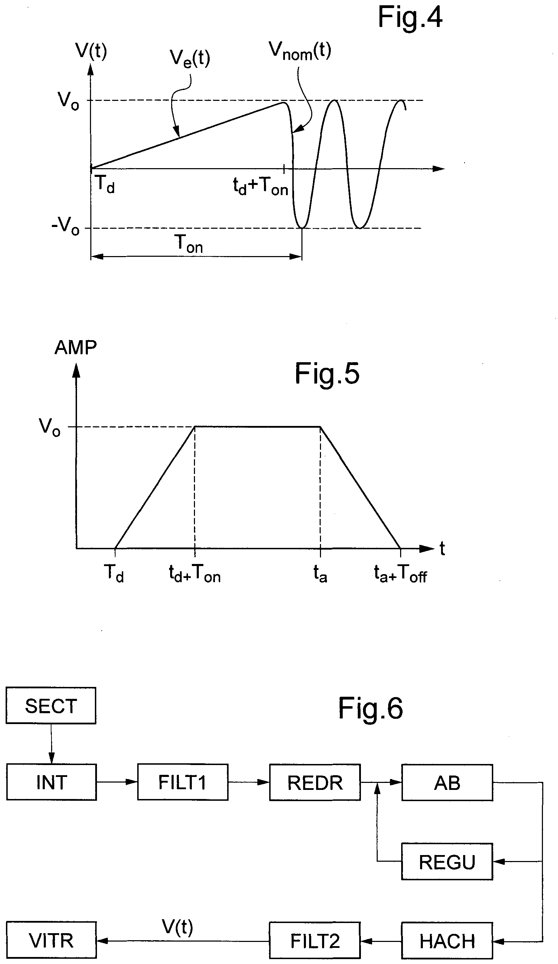

Dans un deuxième mode de réalisation décrit en figure 4, la tension de démarrage Vₑ(t) est linéaire. L'effet visuel de transparence progressive est identique au mode de réalisation décrit en figure 2, et ce mode de réalisation présente en outre l'avantage d'être particulièrement simple de mise en oeuvre. Dans d'autres modes de réalisation non représentés, la tension de démarrage Vₑ(t) est en forme de cloche ou encore de parabole.

La figure 5 illustre la variation de l'amplitude AMP de la tension V(t) en fonction du temps, lorsque l'alimentation ALIM comporte la fonction « smooth start » et la fonction « smooth stop », c'est-à-dire lorsqu'elle est apte à délivrer une tension de démarrage Vₑ(t) et une tension d'arrêt Vₛ(t) d'amplitude progressive. On constate qu'au temps t=t_{d}, c'est-à-dire au démarrage de l'alimentation ALIM, l'amplitude de la tension V(t) croît linéairement jusqu'à atteindre l'amplitude de fonctionnement V₀ au temps t=tₐ+Tₒₙ. Puis, au temps t=tₐ, c'est-à-dire à l'arrêt de l'alimentation ALIM, l'amplitude de la tension V(t) décroit linéairement de l'amplitude de fonctionnement V₀ jusqu'à zéro, valeur qu'elle atteint au temps t=tₐ+T_{oft}.

La figure 6 représente un schéma fonctionnel de l'alimentation ALIM, apte à fournir la tension de démarrage Vₑ(t) et la tension d'arrêt Vₛ(t). Une telle alimentation ALIM est connue de l'homme du métier, un mode de réalisation est rappelé ci-dessous. Cette alimentation électrique ALIM possède une fonction appelée « smooth start »/ « smooth stop » qui permet de contrôler le démarrage et l'arrêt du vitrage VITR par une augmentation progressive et une diminution progressive de l'amplitude de la tension délivrée au vitrage. Ceci engendre une transition en douceur contrôlée entre l'état diffusant et l'état transparent, donnant une meilleure sensation visuelle par rapport à un changement d'état brutal.

L'alimentation ALIM est branchée à un réseau électrique SECT, généralement le secteur dont la fréquence vaut 50 ou 60 Hz, et comporte des éléments suivants :
- un interrupteur INT, en entrée de l'alimentation ALIM, qui permet de relier l'alimentation ALIM au réseau électrique SECT et ainsi de faire fonctionner l'alimentation ALIM ;
- un filtre secteur FILT1 qui est une obligation normative et qui permet de s'assurer que l'alimentation ALIM n'engendre pas de perturbation sur le réseau électrique domestique SECT ;
- un redresseur REDR qui permet, en partant du signal sinusoïdale distribué par le réseau électrique SECT, d'obtenir une tension continue ;
- un abaisseur de tension AB et un automate de régulation REGU, qui forment une alimentation à découpage. L'action conjuguée de l'abaisseur de tension AB et de l'automate de régulation REGU permettent d'obtenir une tension continue à une valeur spécifique ;
- un hacheur HACH qui permet de retransformer ledit signal continu ainsi généré, en tension sinusoïdale ;
- un filtre de sortie FILT2 qui permet d'éliminer les harmoniques inutiles et ainsi purifier le signal appliqué sur le vitrage VITR à cristaux liquides, c'est-à-dire V(t).

Au démarrage, l'action sur l'interrupteur INT alimente l'automate de régulation REGU. L'automate de régulation REGU est conçu pour augmenter progressivement la tension de sortie de 0V à sa valeur nominale, en une durée paramétrée dans un logiciel embarqué : la durée de démarrage Tₒₙ.

La durée de démarrage Tₒₙ est programmable à souhait, en fonction de l'effet de transition souhaité entre l'état diffusant et l'état transparent. Quelques pseudo-périodes de la tension de démarrage Vₑ(t), typiquement 5, sont suffisantes. Pour une fréquence f₀=50Hz, 25 pseudo-périodes de démarrage représentent 0,5 secondes. Pour un effet visuel agréable, on souhaite avantageusement que la durée de démarrage Tₒₙ est d'au moins une demi-seconde, voire d'au moins une seconde.

L'extinction de l'alimentation ALIM via une nouvelle action sur l'interrupteur INT, éteint l'automate de régulation REGU. Cette action désactive le contrôle de la tension de sortie. L'amplitude de la tension d'arrêt Vₛ(t) décroît ainsi progressivement pendant une durée d'arrêt T_{off}. La durée d'arrêt T_{off} est déterminée par les composants du filtre de sortie FILT2 et l'énergie emmagasinée dans le vitrage VITR. Le vitrage VITR à cristaux liquides joue en effet un rôle actif, en oscillation avec des composants du filtre de sortie FILT2.

Avantageusement, les composants de l'alimentation sont choisis de sorte que la durée d'arrêt T_{off} soit avantageusement d'au moins une demi-seconde voire d'au moins une seconde, pour un effet visuel agréable.

On note que cette alimentation permet également de garantir la performance du vitrage VITR à cristaux liquides en limitant les endommagements liés au courant électrique fort au démarrage et à l'arrêt. La durée de vie du vitrage VITR est ainsi rallongée.

## Revendications

1. Vitrage (VITR) électrocommandable à cristaux liquides comportant un substrat porteur d'un élément à cristaux liquides disposé entre une première électrode et une deuxième électrode reliées à une alimentation électrique (ALIM), l'élément à cristaux liquides étant apte à passer :
- d'un état diffusant dans lequel le vitrage (VITR) est soumis à une tension nulle,
- à un état transparent et/ou coloré, dans lequel le vitrage (VITR) est soumis à une tension alternative sinusoïdale (Vₙₒₘ(t)) d'amplitude dite de fonctionnement (V₀),
**caractérisé en ce que** l'alimentation électrique (ALIM) est adaptée pour appliquer au vitrage (VITR) une tension de démarrage (Vₑ(t)) dont l'amplitude augmente progressivement de zéro jusqu'à l'amplitude de fonctionnement (V₀), pendant une durée de démarrage (Tₒₙ) d'au moins 0,1s, débutant suite à l'activation de l'alimentation électrique (ALIM),
et/ou une tension d'arrêt (Vₛ(t)) dont l'amplitude diminue progressivement de l'amplitude de fonctionnement (V₀) jusqu'à zéro, pendant une durée d'arrêt (T_{off}) d'au moins 0,1s débutant suite à l'arrêt de l'alimentation électrique (ALIM).

2. Vitrage (VITR) électrocommandable selon la revendication précédente, **caractérisé en ce que** l'amplitude de la tension de démarrage (Vₑ(t)) augmente linéairement,
et/ou l'amplitude de la tension d'arrêt (Vₛ(t)) diminue linéairement.

3. Vitrage (VITR) électrocommandable selon l'une des revendications 1 à 2, **caractérisé en ce que** la tension de démarrage (Vₑ(t)) est pseudo-sinusoïdale, et/ou la tension d'arrêt (Vₛ(t)) est pseudo-sinusoïdale.

4. Vitrage (VITR) électrocommandable selon la revendication précédente, **caractérisé en ce que** la tension de démarrage (Vₑ(t)) pseudo-sinusoïdale et la tension alternative sinusoïdale (Vₙₒₘ(t)) ont des fréquences sensiblement identiques,
et/ou la tension d'arrêt pseudo-sinusoïdale (Vₛ(t)) et la tension alternative sinusoïdale (Vₙₒₘ(t)) ont des fréquences sensiblement identiques.

5. Vitrage (VITR) électrocommandable selon l'une des revendications 3 à 4, **caractérisé en ce que** la fréquence de la tension de démarrage pseudo-sinusoïdale (Vₑ(t)) est comprise entre 40Hz et 5kHz,
et/ou la fréquence de la tension d'arrêt pseudo-sinusoïdale (Vₛ(t)) est comprise entre 40Hz et 5kHz.

6. Vitrage (VITR) électrocommandable selon l'une des revendications 1 à 2, **caractérisé en ce que** la tension de démarrage (Vₑ(t)) est polynomiale ou linéaire.

7. Vitrage (VITR) électrocommandable selon l'une des revendications précédentes, **caractérisé en ce qu'**au terme de la durée de démarrage (Tₒₙ), le flou du vitrage (VITR) électrocommandable est inférieur à 10%, et de préférence inférieur ou égal à 5%.

8. Vitrage (VITR) électrocommandable selon l'une des revendication précédente, **caractérisé en ce que** l'alimentation (ALIM) comporte des moyens de réglage de la durée de démarrage (Ton).

9. Procédé d'alimentation électrique d'un vitrage (VITR) électrocommandable à cristaux liquides selon l'une quelconque des revendications précédentes, **caractérisé en ce qu'**il comporte les étapes successives suivantes :
- activation de l'alimentation (ALIM)
- application au vitrage (VITR) d'une tension de démarrage (Vₑ(t)) dont l'amplitude augmente progressivement de zéro jusqu'à l'amplitude de fonctionnement (V₀) pendant une durée de démarrage (Tₒₙ) d'au moins 0,1 seconde.

10. Procédé selon la revendication précédente, **caractérisé en ce qu'** i! comporte une étape de réglage de la durée de démarrage (Tₒₙ)

11. Procédé selon l'une des revendications 9 à 10 **caractérisé en ce qu'**il comporte les étapes successives suivantes :
- désactivation de l'alimentation (ALIM) ;
- application au vitrage (VITR) d'une tension d'arrêt (Vₛ(t)) dont l'amplitude diminue progressivement de l'amplitude de fonctionnement (V₀) jusqu'à zéro pendant une durée d'arrêt (T_{off)} d'au moins 0,1 seconde.

## Patentansprüche

1. Elektrisch steuerbare Flüssigkristallverglasung (VITR), umfassend ein Substrat, das ein Flüssigkristallelement trägt, das zwischen einer ersten Elektrode und einer zweiten Elektrode angeordnet ist, die mit einer elektrischen Versorgung (ALIM) verbunden sind, wobei das Flüssigkristallelement ausgelegt ist, um überzugehen von:
- einem diffundierenden Zustand, in dem die Verglasung (VITR) einer Nullspannung unterzogen ist,
- in einen transparenten und/oder gefärbten Zustand, in dem die Verglasung (VITR) einer sinusförmigen Wechselspannung (Vₙₒₘ(t)) mit einer Amplitude, bezeichnet als Funktionsamplitude (V₀), unterzogen ist,
**dadurch gekennzeichnet, dass** die elektrische Versorgung (ALIM) angepasst ist, um auf die Verglasung (VITR) eine Startspannung (Ve(t)), deren Amplitude sich zunehmend von null bis zur Funktionsamplitude (V₀) erhöht, während einer Startdauer (Tₒₙ) von mindestens 0,1 s anzuwenden, die nach der Aktivierung der elektrischen Versorgung (ALIM) beginnt,
und/oder eine Stoppspannung (Vₛ(t)), deren Amplitude zunehmend von der Funktionsamplitude (V₀) bis null während einer Stoppdauer(T_{off}) von mindestens 0,1 s abnimmt, die nach dem Stopp der elektrischen Versorgung (ALIM) beginnt.

2. Elektrisch steuerbare Verglasung (VITR) nach dem vorhergehenden Anspruch, **dadurch gekennzeichnet, dass** sich die Amplitude der Startspannung (Vₑ(t)) linear erhöht
und/oder die Amplitude der Stoppspannung (Vₛ(t)) linear abnimmt.

3. Elektrisch steuerbare Verglasung (VITR) nach einem der vorhergehenden Ansprüche 1 bis 2, **dadurch gekennzeichnet, dass** die Startspannung (Vₑ(t)) pseudo-sinusförmig ist und/oder die Stoppspannung (Vₛ(t)) pseudo-sinusförmig ist.

4. Elektrisch steuerbare Verglasung (VITR) nach dem vorhergehenden Anspruch, **dadurch gekennzeichnet, dass** die pseudo-sinusförmige Startspannung (Vₑ(t)) und die sinusförmitge Wechselspannung (Vₙₒₘ(t)) im Wesentlichen identische Frequenzen aufweisen,
und/oder die pseudo-sinusförmige Stoppspannung (Vₛ(t)) und die sinusförmige Wechselspannung (Vₙₒₘ(t)) im Wesentlichen identische Frequenzen aufweisen.

5. Elektrisch steuerbare Verglasung (VITR) nach einem der Ansprüche 3 bis 4, **dadurch gekennzeichnet, dass** die Frequenz der pseudo-sinusförmigen Startspannung (Vₑ(t)) zwischen 40Hz und 5kHz liegt,
und/oder die Frequenz der pseudo-sinusförmigen Stoppspannung (Vₛ(t)) zwischen 40Hz und 5kHz liegt.

6. Elektrisch steuerbare Verglasung (VITR) nach einem der vorhergehenden Ansprüche 1 bis 2, **dadurch gekennzeichnet, dass** die Startspannung (Vₑ(t)) polynom oder linear ist.

7. Elektrisch steuerbare Verglasung (VITR) nach einem der vorhergehenden Ansprüche, **dadurch gekennzeichnet, dass** am Ende der Startdauer (Tₒₙ) die Unschärfe der elektrisch steuerbaren Verglasung (VITR) geringer als 10 % und vorzugsweise geringer als oder gleich wie 5 % ist.

8. Elektrisch steuerbare Verglasung (VITR) nach einem der vorhergehenden Ansprüche, **dadurch gekennzeichnet, dass** die Versorgung (ALIM) Mittel zur Regelung der Startdauer (Ton) umfasst.

9. Verfahren zur elektrischen Versorgung einer elektrisch steuerbaren Flüssigkristallverglasung (VITR) nach einem beliebigen der vorhergehenden Ansprüche, **dadurch gekennzeichnet, dass** es die folgenden sukzessiven Schritte umfasst:
- Aktivieren der Versorgung (ALIM)
- Anwenden auf die Verglasung (VITR) einer Startspannung (Vₑ(t)), deren Amplitude sich zunehmend von null bis zur Funktionsamplitude (V₀) während einer Startdauer (Tₒₙ) von mindestens 0,1 Sekunden erhöht.

10. Verfahren nach dem vorhergehenden Anspruch, **dadurch gekennzeichnet, dass** es einen Schritt des Regelns der Startdauer (Tₒₙ) umfasst.

11. Verfahren nach einem der Ansprüche 9 bis 10, **dadurch gekennzeichnet, dass** es die folgenden sukzessiven Schritte umfasst:
- Deaktivieren der Versorgung (ALIM),
- Anwenden auf die Verglasung (VITR) einer Stoppspannung (Vₛ(t)), deren Amplitude zunehmend von der Funktionsamplitude (V₀) bis null während einer Stoppdauer (T_{off}) von mindestens 0,1 Sekunden abnimmt.

## Claims

1. An electrically-controlled liquid crystal glazing unit (VITR) comprising a substrate carrying a liquid crystal element disposed between a first electrode and a second electrode connected to an electrical power supply (ALIM), the liquid crystal element being capable of going:
- from a diffusing state in which the glazing unit (VITR) is subjected to a zero voltage,
- to a transparent and/or colored state, in which the glazing unit (VITR) is subjected to a sinusoidal AC voltage (Vₙₒₘ(t)) with an amplitude referred to as operating amplitude (V₀),
**characterized in that** the electrical power supply (ALIM) is designed to apply to the glazing unit (VITR) a start-up voltage (Vₑ(t)) whose amplitude progressively increases from zero up to the operating amplitude (V₀), over a start-up period of time (Tₒₙ) of at least 0.1 seconds beginning following the activation of the electrical power supply (ALIM), and/or a shut-down voltage (Vₛ(t)) whose amplitude decreases progressively from the operating amplitude (V₀) down to zero, over a shut-down period of time (T_{off}) of at least 0.1 seconds beginning following the shut-down of the electrical power supply (ALIM).

2. The electrically-controlled glazing unit (VITR) as claimed in the preceding claim, **characterized in that** the amplitude of the start-up voltage (Vₑ(t)) increases linearly, and/or the amplitude of the shut-down voltage (Vₛ(t)) decreases linearly.

3. The electrically-controlled glazing unit (VITR) as claimed in either of claims 1 and 2, **characterized in that** the start-up voltage (Vₑ(t)) is pseudo-sinusoidal, and/or the shut-down voltage (Vₛ(t)) is pseudo-sinusoidal.

4. The electrically-controlled glazing unit (VITR) as claimed in the preceding claim, **characterized in that** the pseudo-sinusoidal start-up voltage (Vₑ(t)) and the sinusoidal AC voltage (Vₙₒₘ(t)) have frequencies that are substantially identical,
and/or the shut-down voltage (Vₛ(t)) and the sinusoidal AC voltage (Vₙₒₘ(t)) have frequencies that are substantially identical.

5. The electrically-controlled glazing unit (VITR) as claimed in either of claims 3 and 4, **characterized in that** the frequency of the pseudo-sinusoidal start-up voltage (Vₑ(t)) is in the range between 40Hz and 5kHz, and/or the frequency of the shut-down voltage (Vₛ(t)) is in the range between 40Hz and 5kHz.

6. The electrically-controlled glazing unit (VITR) as claimed in either of claims 1 and 2, **characterized in that** the start-up voltage (Vₑ(t)) is polynomial or linear.

7. The electrically-controlled glazing unit (VITR) as claimed in either of the preceding claims, **characterized in that**, at the end of the start-up period (Tₒₙ), the haze of the electrically-controlled glazing unit (VITR) is less than 10%, and preferably less than or equal to 5%.

8. The electrically-controlled glazing unit (VITR) as claimed in either of the preceding claims, **characterized in that** the power supply (ALIM) comprises means of adjustment of the start-up period (Tₒₙ).

9. A method for supplying electrical power to a liquid crystal electrically-controlled glazing unit (VITR) as claimed in any one of the preceding claims, **characterized in that** it comprises the following successive steps:
- enabling of the power supply (ALIM);
- application to the glazing unit (VITR) of a start-up voltage (Vₑ(t)) whose amplitude progressively increases from zero up to the operating amplitude (V₀) over a start-up period of time (Tₒₙ) of at least 0.1 seconds.

10. The method as claimed in the preceding claim, **characterized in that** it comprises a step for adjusting the start-up period (Tₒₙ).

11. The method as claimed in either of claims 9 and 10 **characterized in that** it comprises the following successive steps:
- disabling of the power supply (ALIM);
- application to the glazing unit (VITR) a shut-down voltage (Vₛ(t)) whose amplitude decreases progressively from the operating amplitude (V₀) down to zero over a shut-down period of time (T_{off}) of at least 0.1 seconds.
